# EUROPEAN PATENT SPECIFICATION

(11) **EP 1 383 401 B1**
(45) Date of publication and mention of the grant of the patent: **05.09.2007**
(21) Application number: 02712992.3
(22) Date of filing: 05.04.2002
(51) Int. Cl.: A41D 27/28, A41D 31/02, B32B 3/10, B32B 5/18

(54) **CELLULAR PLASTIC MATERIAL**
ZELLULARES KUNSTSTOFFMATERIAL
MATIERE CELLULAIRE PLASTIQUE

(30) Priority: 05.04.2001 FI 20010711
(43) Date of publication of application: 28.01.2004
(73) Proprietor: Laaksonen, Kari, 23800 Laitila (FI)
(72) Inventor: Laaksonen, Kari, 23800 Laitila (FI)
(74) Representative: Laitinen, Pauli Sakari
(86) International application number: PCT/FI2002/000291
(87) International publication number: WO 2002/080717

(56) References cited:
- WO-A1-01/24663
- WO-A1-98/53980
- GB-A- 2 312 643
- US-A- 4 770 919
- US-A- 5 705 252

## Description

The present invention relates to a cellular plastic material and particularly to such a material as can be used, for example, as a flotation material in flotation devices, such as flotation jackets, boating jackets and similar personal safety devices, as an impact-absorbing material in sportswear and similar, or, for instance as a material that is breathable and insulates from heat, or more especially from cold. Its use is naturally not restricted to only these uses.

Life jackets are known and very widely used nowadays in activities on water. Several different forms of them are known, the two most common basictypes being life jackets and slightly lighter boating jackets. The general principle in the said lifesaving devices is that their basic model is a jacket attached around the upper part of the body, which will support a person should they find themselves in water. Proper life jackets also often have a component that will turn an unconscious person onto their back in the water and support them with their head above water, to prevent them from drowning.

A common feature of all jackets is that, inside various cloth-like support fabrics, they contain a flotation material, which is intended to provide the actual support, as it is essentially non-absorbent to, and lighter than water. The conventional material is a sheet of closed-cell plastic, which located in a pocket in the structure of the jacket.

The use of conventional jackets is to some extent uncomfortable, because the structure of the closed-cell plastic naturally does not breathe, so that the non-breathing jacket worn tightly on the user easily creates a sweaty feeling, which increases the uncomfortable feeling created by the jacket as such.

The flotation-type material described above is used in much sportswear as an impact-absorbing material. For example, in the trousers and other equipment used by ice-hockey players, cellular plastic sewn inside a cloth fabric is used to cushion the impact of the puck and the blows of, and collisions with other players, and similar.

The games equipment is often extremely sweat-inducing, because the impact-protection material is non-breathable, nor can the material be made from a substance with a basic structure that is permeable to air, as in that case it would also absorb sweat into itself, thus making it difficult to use.

A material that is equipped with slits, which open during use to create openings improving breathability, is known from Finnish patent application 972210. An adaptation of this, in which there is a hole relating to the slitting, is known from the Finnish patent application.

A drawback in the slit constructions described above is that, as the slits are straight and often parallel to each other, they prevent the formation of breathing openings if the material is stretched in the wrong direction. In other words, stretching in the direction of the slits does not create openings, as only more or less transverse stretching is able to induce the formation of the desired openings. When manufacturing garments, for example, this creates strict requirements concerning the directions of the cutting of the materials for making the garments.

GB 2 312 643 A discloses a celluar plastic material comprising the features of the preamble of claim 1.

The present invention is intended to create relieve the non-breathable constructions relating to lifesaving devices, games equipment, and similar, thus making them more comfortable to use and, especially in the case of lifesaving devices, to increase the probability that they will be used in activities on water. The intention is also to ensure that the material can be used more or less freely in any direction whatever, when placing it in the desired garment or similar application.

The aforesaid and other advantages and benefits of the invention are achieved in the manner stated to be characteristic in the accompanying Claims.

In the following, the invention is described in greater detail with reference to the accompanying drawings, in which:
Figure 1 shows the invention in the "normal position" and
Figure 2 shows an example of the shape of the slits, when they are stretched open.

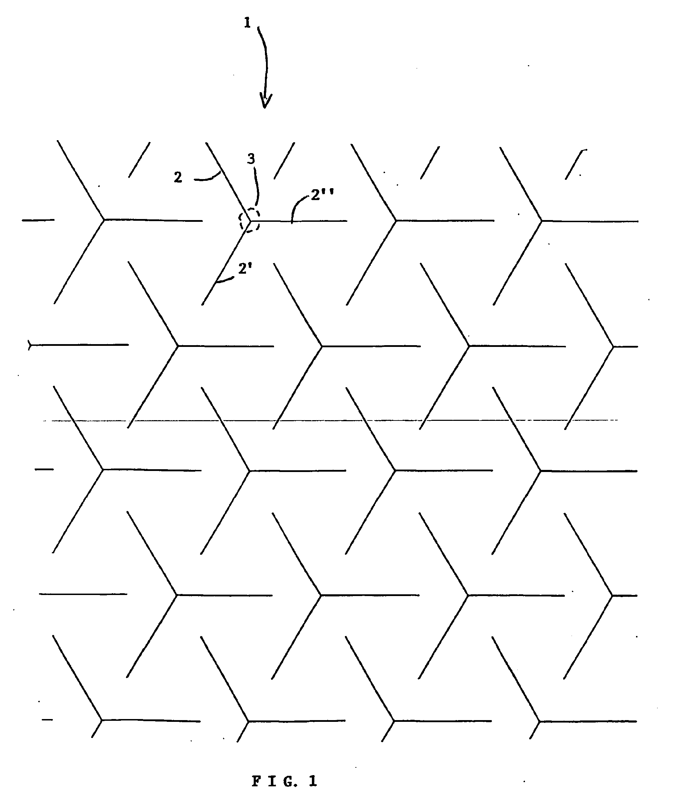

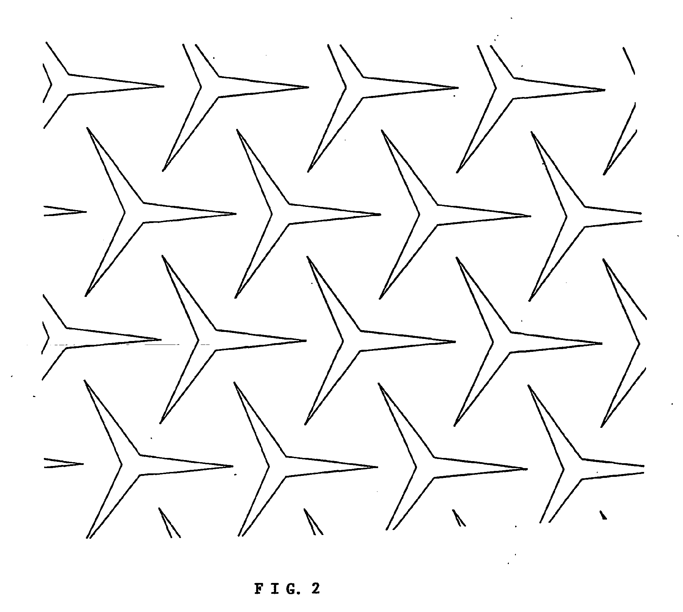

Figures 1 and 2 thus show floatation or impact-absorbing material according to the invention, which is seen here from directly above. In a normal situation, the material is, for example, a sheet-like piece, from which suitable pieces are then cut for the purpose desired at the time. The thickness of the material is always selected for specific cases and the raw material is particularly closed-cell plastic, which thus does not essentially absorb water, but which has excellent flotation properties. The 'hardness' of the material is selected to also meet the requisite criteria in terms of impact resistance.

In the sheet of material shown in Figure 1, there are slits 2, 2', 2", which are made mainly as cuts through the material. In this embodiment, the cuts 2, 2', 2" have three parts, so that the slit runs in three directions from the same point. The directions can be essentially at angles of 120 degrees to each other, but they can also be at other angles. What is essential is that a pattern opening out in several directions is formed.

The opening of the pattern cut according to the invention is illustrated in Figure 2, from which it can be clearly seen that even a relatively small stretch will create good ventilation. Surprisingly, the material cut according to the invention opens, with small exceptions, in more or less the same pattern, no matter in which direction the stretching takes place. This gives freedom, for example, to plan the cutting of parts for flotation jackets or similar in a manner that will save material, instead of having to take into account in which direction stretching will create openings and in which direction it will not.

It is obvious that, if necessary, more than three slits can be made, though this would perhaps be over-dimensioned in terms of the operation of the invention, as practical tests have shown that excellent operation can be achieved even with three cuts.

Figure 1 also shows, with broken lines, perforation 3, which can be used in this case too. The use of perforation is disclosed in Finnish patent application 19992145, in which the applicant is the applicant of the present application. By perforating the junction of the cuts, certain advantages in handling technique are gained, which are described in greater detail in the said application. At the same time, a certain degree of breathability is created in the material by means of the perforation, even when the slits are not opened. It is obvious that the perforation can be made in addition to the slitting, at any point in the material, if this seems necessary.

Figure 1 shows the slits 2, 2', and 2" made to interleave, so that the solid strips of material remaining between the cuts are quite narrow. It is obvious that the cuts are made according to the requirements of each case - if there is a need to create less breathability, the cuts can be made shorter and, if necessary, they can be located further from each other. It is obvious that the maximum extent of the cuts must not endanger the durability of the material required for the application. In terms of manufacturing technique, it is preferable to make the slits to interleave in such a way that only three essentially straight slitting directions are formed.

As was already stated above, the material is particularly closed cell plastic, but if the flotation properties or properties relating to moisture absorption are not very important, then the cellular plastic can equally well be an open cell plastic. When selecting the plastic materials, it is possible to use a wide range, always to suit the purpose. By using certain additives, it is possible to vary the properties of the material in many ways. Polyethylene, which is very widely used, is one possible type of material. There are many other possibilities. The thickness of the material is also selected to suit the purpose, and, as such, is not restricted.

It is possible to ensure that the openings according to the invention remain open in many different ways, such as laminated a fabric on one side of the material 1, which has a sufficiently open weave for air to pass through it easily, but which when it is attached to the entire base gives the material a pattern in which its openings are at least partly open. This type of lamination also creates a great advantage of the material according to the invention, i.e. flexibility. This is because if a sheet-like material nottreated in anyway is used, the material will be stiff. Now, on the contrary, the material is made flexible by 'opening' is structure. Another way is to attach the material according to the invention, for example, to life jackets, by securing the edges of the sheet of the material to the garment, so that when the wearer puts it on it stretches and simultaneously pulls the cuts open.

The invention can be adapted in many ways without deviating from the inventive idea or the scope of the protection defined by the accompanying Claims. Thus, for example, the applications described above are some form of garment that is relatively tightly against the user's skin, but this in no way needs to be the case. Application can also be embodiments, in which the material according to the invention is used as an external structure, with which the user's skin comes into contact only from time to time. One example that can be mentioned are various kinds of covers for seats.

For example, in garden furniture used in summer seat cushions are used, the material of which should preferably be impermeable to water, as then the seats need not be so carefully protected from showers of rain and similar events. Closed cell plastic does not absorb water, but in summer heat it is a sweaty material to sit on. The use of the material according to the invention in seat cushioning will solve this problem.

It should also be mentioned that it is not only people who need to use a sweat-free material. Thus, for example, blankets, which are often of a felt-based material, are used for horses. Felt will become wet due to both the animal's sweat and rain, etc. and then becomes a material that undoubtedly is uncomfortable, which retains heat poorly. By using the material according to the invention that does not absorb moisture and is flexible and breathable it is possible to create a blanket solution that is much more comfortable and warm than felt.

It is clear that the invention can be applied to numerous purposes, which are not separately referred to in this connection.

## Claims

1. A cellular plastic material (1) for use particularly in applications, in which the material comes close to the skin, thus preventing normal ventilation of the skin, or in applications in which breathability is otherwise required, in which case there are at least three slits (2, 2', 2") in separate cuts, in which the slits run in different directions from essentially the same point, **characterized in that** the slits are arranged in such a way that the slits neighbored to each other in separate cuts at least partially interleave.

2. A material according to Claim 1, **characterized in that** the slits (2, 2', 2") form a pattern, in which the angles between the slits are essentially 120 degrees.

3. A material according to Claim 1, **characterized in that** there is a perforation at the junction of the slits (2, 2', 2").

4. A material according to any of the above Claims, **characterized in that** there is perforation elsewhere in the material as well as at the junction of the slits.

5. A material according to Claim 1, **characterized in that** in the material (1) there is at least on one side of it a cloth or similar material, which is laminated onto the material (1) in its stretched state with the slits opened.

6. A material according to Claim 1, **characterized in that** the slits (2, 2', 2") are made in such a way to interleave, that they form three essentially straight slitting directions.

7. A material according to Claim 1, **characterized in that** the material is a closed cell plastic material.

## Patentansprüche

1. Schaumkunststoffmaterial (1) zur Verwendung insbesondere in Anwendungen, wo das Material dicht an der Haut getragen wird und somit normale Ventilation der Haut verhindert, oder in Anwendungen, wo sonst Atmungsfähigkeit erfordert wird, in welchem Fall es mindestens drei Schlitze (2, 2', 2") in separaten Einschnitten gibt, wo die Schlitze von im Wesentlichen der gleichen Stelle in verschiedene Richtungen verlaufen, **dadurch gekennzeichnet, dass** die Schlitze auf solche Weise angeordnet sind, dass sich die jeweils benachbarten Schlitze in getrennten Schnitten zumindest teilweise überlappen.

2. Material nach Patentanspruch 1, **dadurch gekennzeichnet, dass** die Schlitze (2, 2', 2") ein Muster bilden, bei dem die Winkel zwischen den Schlitzen im Wesentlichen 120 Grad sind.

3. Material nach Patentanspruch 1, **dadurch gekennzeichnet, dass** es im Knotenpunkt der Schlitze (2, 2', 2") eine Perforation gibt.

4. Material nach einem der obigen Patentansprüche, **dadurch gekennzeichnet, dass** es sowohl im Material woanders als auch im Knotenpunkt der Schlitze eine Perforation gibt.

5. Material nach Patentanspruch 1, **dadurch gekennzeichnet, dass** es im Material (1) auf mindestens einer Seite desselben einen Stoff oder ein ähnliches Material gibt, das auf das Material (1) in seinem ausgedehnten Zustand mit geöffneten Schlitzen laminiert worden ist.

6. Material nach Patentanspruch 1, **dadurch gekennzeichnet, dass** die Schlitze (2, 2', 2") auf solche Weise zur Überlappung gebracht werden, dass sie im Wesentlichen drei gerade Schlitzrichtungen bilden.

7. Material nach Patentanspruch 1, **dadurch gekennzeichnet, dass** das Material ein geschlossenes Schaumkunststoffmaterial ist.

## Revendications

1. Matière plastique cellulaire (1) pour utilisation en particulier dans des applications, où le matériau est près de la peau, empêchant ainsi la ventilation normale de la peau, et dans des applications où la respirabilité est autrement demandée, dans quel cas il y a au moins trois fentes (2, 2', 2") en coupures séparées, dans lesquelles les fentes passent en différentes directions essentiellement à partir du même point, **caractérisée en ce que** les fentes sont arrangées de telle manière que celles qui sont adjacentes dans des coupures séparées sont au moins partiellement intercalées.

2. Matière selon la revendication 1, **caractérisée en ce que** les fentes (2, 2', 2") forment un patron, dans lequel les angles entre les fentes sont essentiellement de 120 degrés.

3. Matière selon la revendication 1, **caractérisée en ce qu'**il y a une perforation à la jonction des incisions (2, 2', 2").

4. Matière selon l'une quelconque des revendications précédentes, **caractérisée en ce qu'**il y a perforation ailleurs dans la matière aussi bien qu'à la jonction des fentes.

5. Matière selon la revendication 1, **caractérisée en ce que** dans la matière (1) il y a au moins sur une face de celle-ci un tissu ou un matériau similaire, qui est laminé sur la matière (1) dans son état étiré avec les fentes ouvertes.

6. Matière selon la revendication 1, **caractérisée en ce que** les fentes (2, 2', 2") sont réalisées de telle manière à ce qu'elles soient intercalées pour former trois directions de fentes essentiellement droites.

7. Matière selon la revendication 1, **caractérisée en ce que** la matière est une matière plastique cellulaire fermée.
